# EUROPEAN PATENT APPLICATION

(11) **EP 4 256 958 A1**
(43) Date of publication of application: **11.10.2023**
(21) Application number: 21847527.5
(22) Date of filing: 15.11.2021
(51) Int. Cl.: A01N 1/02

(54) **COMPOSITION FOR CRYOPRESERVATION OF BIOLOGICAL SAMPLES FOR PCR**

(30) Priority: 13.11.2020 PT 2020116881
(71) Applicant: Targetalent, Lda, 4585-116 Gandra (PT); Das Neves Ferreira, Fernando Jorge, 4445-199 Alfena (PT); De Melo Alves, Paula, 4560-792 Penafiel (PT)
(72) Inventor: CARVALHO ALVES, Daniela Sofia, 4600-059 Amarante (PT); MOTA OLIVEIRA, Telma Sofia, 4510 - 122 Jovim (PT); DAS NEVES FERREIRA, Fernando Jorge, 4445-199 Alfena (PT); DE MELO ALVES, Paula, 4560-792 Penafiel (PT)
(74) Representative: Patentree
(86) International application number: PCT/IB2021/060563
(87) International publication number: WO 2022/101877

(57) **Abstract**

The present disclosure is related to a composition for cryopreservation of biological samples for the identification of viruses by polymerase chain reaction, namely for the identification of SARS-CoV-2 in saliva and/or oral mucosa samples using a swab. More particularly, to the use of the composition for cryopreservation described in the present disclosure as a preservative of the genetic material for up to 48 hours after collection. The present disclosure is also related to a set/kit for cryopreservation of a biological sample.

## Description

### Technical field

The present disclosure relates to a composition for cryopreservation of biological samples for the identification of viruses by polymerase chain reaction, namely for the identification of SARS-CoV-2 (Severe Acute Respiratory Syndrome - Coronavirus 2) in saliva and/or oral mucosa samples using a swab.

The present disclosure also concerns a set/kit for cryopreservation of a biological sample.

### Background

It was in Wuhan Province, China, that in December 2019 an outbreak of atypical pneumonia occurred, with a high transmission rate and associated mortality. Its rapid spread forced the WHO to declare a pandemic state in March 2020.

The outbreak was caused by the appearance of a new and unknown virus, initially named N-CoV19 (New Coronavirus 2019), later changed to SARS-CoV-2 (Severe Acute Respiratory Syndrome-Coronavirus 2).

According to the World Health Organization (WHO), the genomic sequence identified in the new virus is very similar to that of other viruses already known and studied, which made it possible to state that it was a new strain of coronavirus (https://covid19.min-saude.pt/category/perguntas-frequentes/).

Classified as belonging to the family *Coronaviridae,* subfamily *Coronavirinae* and genus β-coronavirus, SARS-CoV-2 is thought to be a zoonotic virus (possibly having the bat as the usual host), which has crossed the species barrier and has infected humans through intermediate hosts (https://doi.org/10.1016/j.arcmed.2020.04.022).

Coronaviruses (CoVs) are a large family of viruses, responsible for causing numerous respiratory diseases in humans, ranging from common cold to severe, potentially lethal respiratory infections, with Covid-19 being the name given to the disease caused by the new coronavirus.

SARS-CoV (Severe Acute Respiratory Syndrome Coronavirus) and MERS-CoV (Middle East Respiratory Syndrome Coronavirus) are examples of other coronaviruses that cause severe, highly fatal pneumonia (https://WHO/2019-nCoV/FAQ/Virus_origin/2020.1).

With a rounded shape, having a diameter of between 65 and 125 nm, and crown-like spikes on its surface, SARS-CoV-2 is composed of four main structural proteins and multiple accessory proteins.

The four major structural proteins are the S-glycoprotein (Spike), E-glycoprotein (similar to a small envelope), M-glycoprotein (membrane glycoprotein) and the Nucleocapsid (N-protein).

Each of these proteins performs distinct functions, however, equally essential for the survival, stability and replication of the virus.

In order for S-glycoprotein (Spike) to become functional, the S-protein needs to be cleaved into 2 subunits (S1 and S2), thus increasing its connection to the host cells.

Cleavage of the Spike protein occurs by the action of Furin, an enzyme present in host cells of different organs such as liver, lung, kidney or intestines, a fact that may justify the high rate of infection and contagion between individuals (https://www.medicalnewstoday.com/articles/why-does-sars-cov-2-spread-so-easily).

The S1 and S2 subunits have high affinity for the angiotensin converting enzyme 2 (ACE2) produced by lower respiratory tract cells, upper digestive tract epithelial cells, enteric absorption cells, urinary tract myocardial cells, including kidney and bladder.

The expression of ACE2 by all of these cells explains the clinical manifestations that can arise in patients, from acute respiratory disease to potential complications of the heart, kidney and digestive tract, which can lead to death of the infected subject.

E-Glycoprotein - is the smallest structural protein with an active role in the production and maturation of this virus.

M-glycoprotein - corresponds to the membrane and is determinant in the envelope form of the virus. It allows it to become structurally robust by protecting the Nucleocapsid-RNA complex inside the virion.

N-protein or Nucleocapsid - is a structural component directly linked to the genome, thus being a determinant protein in the virus replication cycle as well as in cellular response of host cells to viral infection (https://doi.org/10.1016/j.dsx.2020.04.020).

Due to the highly infectious and pathogenic character of SARS-CoV-2, the best way to fight this pandemic and prevent Covid-19 is to identify and break the contagion chains, thus preventing the continuous spread of the virus.

It is only possible to break up contagion chains by carrying out laboratory diagnostic tests, which are highly sensitive and precise in the detection of viral load.

There are different laboratory tests with different functions (serological tests and diagnostic tests).

Serological testing is based on the identification of antibodies anti-SARS-CoV-2 (IgA, IgG, and IgM immunoglobulins) produced by the immune system generally from the second week of infection, although there are studies that have detected the presence of IgM from the fifth day of infection. Its importance is at the level of epidemiological studies of the prevalence of the disease in the population, as well as assessment of "herd immunity" status. They cannot be used as a diagnostic tool (https://www.infarmed.pt/documents/15786/3584301/Testes+Laboratoriais+para+SA RS-CoV-2%3B+Testes+R%C3%Alpidos/29d4e514-23df-f208-efbd-b47eba8984bc).

The detection of molecular components of the virus (either by expression of certain proteins, or by identification of specific sequences of its genome) is the only way of making a precise and accurate diagnosis.

Molecular Biology plays indeed an extremely important role in the fight against this pandemic.

Reverse transcriptase is an enzyme that uses a specific DNA primer sequence to pair with the sample RNA and form the complementary DNA strand (cDNA), to which the Real time PCR technique is then applied (https://microbenotes.com/real-time-pcr-principle-process-markers-advantages-applications/).

Real-time PCR is a technique used to quantify specific DNA or RNA sequences in a sample.

If there is a strong presence of the sequence that is intended to be amplified, the amplification begins in more initial cycles. If, on the other hand, there is no abundant presence of the genetic material, the amplification occurs in the later cycles (Real time PCR handbook).

The 3 main steps of Real Time PCR are: Denaturation (high temperatures cause the separation of the DNA double strand), Annealing (pairing of the specific primers with each of the DNA simple strands) and Extension (synthesis of the new sequences of the target DNA by the action of a DNA polymerase).

Molecular detection methods, which include PCR, do not require a virus capable of replicating, but preservation of their nucleic acids is essential (jcm.asm.org 0095-1137/12/$12.00 Journal of Clinical Microbiology p. 1064-1065).

Regarding the obtention of genetic material (RNA) from SARS-CoV-2, the sample is taken by exfoliating the mucosa in the nasal/oropharynx using a swab, which should be placed in a suitable transport medium until it reaches the laboratory for processing.

The chosen transport medium is of great importance, as it can condition or even render impossible the results obtained in the laboratory.

The choice of the transport medium must be appropriate to the type of sample. Therefore, if the sample is collected on suspicion of bacterial infection, the transport medium must be different from the medium used for a sample taken on suspicion of viral infection.

However, whatever the transport medium, its function is to maintain the stability of the sample and preserve both the genetic material of the host cells, and the genome of the suspect microorganism.

Mostly commercial transport media consist of a buffer solution, antimicrobials, proteins or amino acids and a semi-solid solvent, usually gelatin or sucrose (e.g. Universal Transport Media, M4RT, M4) - August 2020 Volume 58 Issue 8 e00913-20 Journal of Clinical Microbiology jcm.asm.org.

Some commercial transport media may also have a lysis solution in their constitution (e.g. CyMol, Primestore MTM, eNat).

As a rule, the lysis solution (inactivation) is an alcoholic solution of guanidine thiocyanate and has the advantage of transforming the potentially pathogenic sample into innocuous, while preserving the nucleic acids needed for detection and amplification by PCR. In pandemic situations, this type of transport medium becomes an asset, as it allows the reduction of the risk of transmission during handling, transport and laboratory processing (JOURNAL OF CLINICAL MICROBIOLOGY, June 2011, p. 2138-2142).

These facts are described in order to illustrate the technical problem addressed by the present invention.

### General Description

The present disclosure is related to a composition for cryopreservation of biological samples for the identification of a virus by polymerase chain reaction, in particular for the identification of SARS-CoV-2 (Severe Acute Respiratory Syndrome-Coronavirus 2) virus in saliva and/or oral mucosa samples using a swab. More particularly, it is related to the use of the composition for cryopreservation described in the present disclosure as a preservative of the genetic material for up to 48 h after collection, preferably 72 h after collection.

The present disclosure is also related to a set/kit for cryopreservation of a biological sample.

The present disclosure is related to a composition for cryopreservation of a biological sample for the identification of a virus by polymerase chain reaction (PCR) comprising:
a buffer solution for maintenance of physiological pH and osmotic pressure;
a protein solution for preservation of the genetic material of the sample;
at least one antimicrobial agent to prevent sample contamination;
a solution comprising agar and/or sucrose to support the sample and preserve the contents of the biological sample.

The sucrose solution/agar solution main function is to give consistency to the medium and act as cryoprotectant.

In a preferred embodiment, the composition for cryopreservation described in the present disclosure may comprise:
65 - 83 % (v/v) of a buffer solution;
1 - 5 % (v/v) of a protein solution;
0.5 - 3 % (v/v) of at least one antimicrobial agent;
15 - 20 % (v/v) of a solution containing agar and/or sucrose.

In a preferred embodiment, the composition for cryopreservation described in the present disclosure may comprise:
80 - 83 % (v/v) of a buffer solution, preferably 81.4 % (v/v);
1- 2 % (v/v) of a protein solution, preferably 1.63% (v/v);
0.5 -1 % (v/v) of at least one antimicrobial agent, preferably 0.64 % (v/v);
15 - 17% (v/v) of a solution containing agar and/or sucrose, preferably 16.29 % (v/v).

In one embodiment for better results, the composition of the present disclosure comprises agar.

In one embodiment, the antimicrobial agents prevent the proliferation of bacteria and fungi that can contaminate the sample. In one embodiment, the antimicrobial agent may be an antibiotic, or an antifungal or mixtures thereof.

In one embodiment, the antibiotic is selected from a list consisting of colistin, gentamicin, vancomycin, or mixtures thereof; preferably gentamicin.

In one embodiment, the antifungal is amphotericin B.

In one embodiment, the buffer solution is Hank's balanced salt solution, phosphate saline buffer, saline, or mixtures thereof.

In one embodiment, Hank's balanced salt solution or phosphate saline buffer have in their composition water and several inorganic ions. Their function is the maintenance of physiological pH and the stability of osmotic pressure.

In one embodiment, the protein solution is fetal bovine serum, fetal equine serum, or mixtures thereof, preferably fetal bovine serum.

In one embodiment, the fetal bovine serum (FBS) provides the transport medium with characteristics as close as possible to the host's cells. The high protein concentration in the serum also acts as a cryoprotectant during the freezing process.

In one embodiment, the composition for cryopreservation described in the present disclosure may also comprise a lysis solution. In particular, guanidine thiocyanate.

In one embodiment, the biological sample is a saliva sample, or an oral mucosa sample, or a nasopharynx sample, or an oropharynx sample.

In one embodiment, the virus is Severe Acute Respiratory Syndrome-Coronavirus 2 (SARS-CoV-2).

Another aspect of the present disclosure relates to a kit/set for cryopreservation of a biological sample comprising the composition for cryopreservation described in the present disclosure.

In one embodiment, the kit/set of the present disclosure may also comprise a sample collecting means, preferably a swab.

In one embodiment, the total volume of the sample ranges from 250 - 350 ml, preferably from 305 - 320 ml.

Another aspect of the present disclosure is related to the use of the composition for cryopreservation described in the present disclosure for the preservation of biological samples as an improver or enhancer of the preservation of the sample genetic material.

In one embodiment, the composition for cryopreservation described in the present disclosure can be used for preserving the biological sample genetic material for up to 48 hours after collection, preferably 72 h.

In one embodiment, the composition for cryopreservation described in the present disclosure can be used for preserving the biological sample genetic material at a freezing temperature ranging from -70 °C to 5 °C, preferably from -70 °C to -20 °C.

### Brief description of the drawings

For an easier understanding, figures are herein attached, which represent preferred embodiments that do not intend to limit the object of the present description.
**Figure 1****:** Schematic representation of the shape and structure of SARS-CoV-2 virus.
**Figure 2****:** Schematic representation of real-time PCR steps.
**Figure 3****:** Representation of an embodiment of RT-PCR analysis on samples collected using the transport medium comprising PBS buffer solution, fetal bovine serum, gentamicin, amphotericin and agar.
**Figure 4****:** Representation of an embodiment of RT-PCR analysis on samples collected using the transport medium comprising PBS buffer solution, fetal bovine serum, gentamicin, amphotericin and agar, after 5 days frozen at -20°C.
**Figure 5****:** Representation of an embodiment of RT-PCR analysis on samples collected using the transport medium comprising PBS buffer solution, fetal bovine serum, gentamicin, amphotericin and agar, after 11 days frozen at -20°C.
**Figure 6****:** Representation of an embodiment of RT-PCR analysis on samples collected using the transport medium comprising PBS buffer solution, fetal bovine serum, gentamicin, amphotericin and agar, after 19 days frozen at -20°C.
**Figure 7****:** Representation of an embodiment of RT-PCR analysis on a sample collected using the transport medium comprising PBS buffer solution, fetal bovine serum, gentamicin, amphotericin and agar, with positive result for Sars-CoV-2.

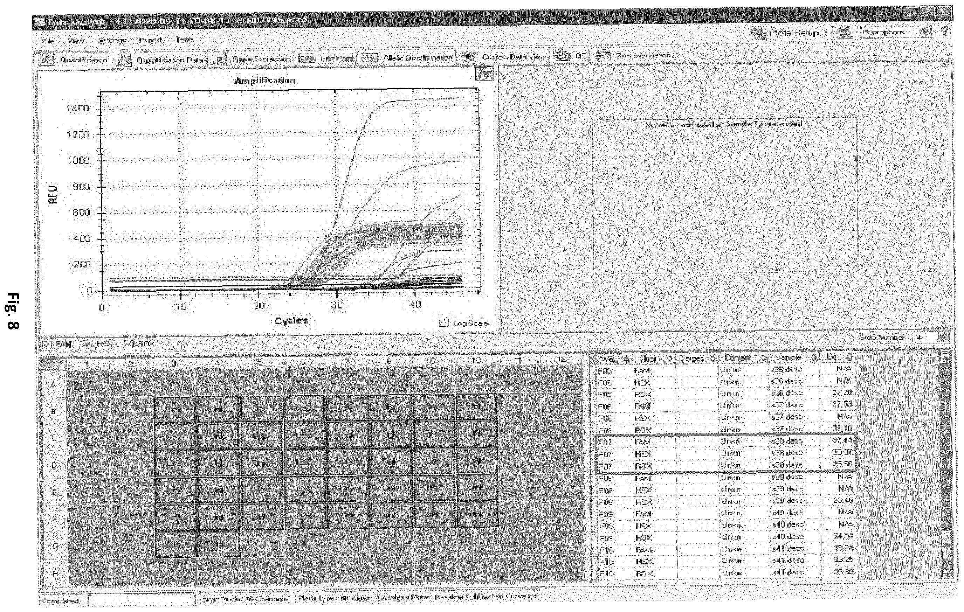

**Figure 8****:** Representation of an embodiment of RT-PCR analysis on a sample collected using the transport medium comprising PBS buffer solution, fetal bovine serum, gentamicin, amphotericin and agar, after 7 days frozen at -20°C.

### Detailed description

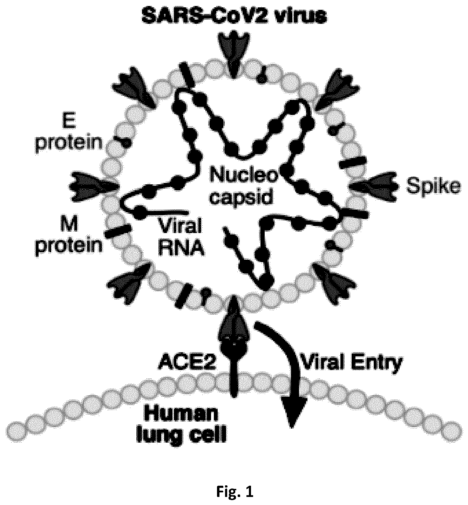

The present disclosure is related to a composition for cryopreservation of biological samples for the identification of a virus by polymerase chain reaction, in particular for the identification of SARS-CoV-2 (Severe Acute Respiratory Syndrome-Coronavirus 2) virus in saliva and/or oral mucosa samples using a swab. Figure 1 shows a schematic representation of the shape and structure of SARS-CoV-2 virus.

The present disclosure is also related to a set/kit for cryopreservation of a biological sample.

In the present disclosure, several possibilities of viral transport medium have been tested that were surprisingly able to preserve the sample's genetic material intact after several hours of freezing, for cases with a high waiting period between sample collecting and the laboratory processing thereof, in order to avoid degradation of the virus's and host's genetic material.

Table 1 shows several embodiments of the compositions for cryopreservation of a biological sample of the present disclosure.

**Table 1 - Composition of 4 viral transport media - compositions for cryopreservation described in the present disclosure**

| **Transport medium 1** | **Transport medium 2** | **Transport medium 3** | **Transport medium 4** |
|---|---|---|---|
| 250 ml Hank's solution | 250 ml Hank's solution | 250 ml PBS buffer solution | 250 ml PBS buffer solution |
| 5 ml fetal bovine serum | 5 ml fetal bovine serum | 5 ml fetal bovine serum | 5 ml fetal bovine serum |
| 1 ml Gentamicin | 1 ml Gentamicin | 1 ml Gentamicin | 1 ml Gentamicin |
| 1 ml Amphotericin B | 1 ml Amphotericin B | 1 ml Amphotericin B | 1 ml Amphotericin B |
| 50 ml Agar Solution | 50 ml Sucrose Solution | 50 ml Agar Solution | 50 ml Sucrose Solution |

In one embodiment, 86 samples of nasopharynx and/or oropharynx were collected with the use of a swab, saliva and/or oral mucosa samples with the use of a swab, and saliva samples, from negative and positive patients of various ages, into sterile tubes with 3mL of the transport medium to be tested. The swab was immediately placed in the bottle after collection and immediately came into contact with the transport medium. For the saliva collection, the patients were instructed to accumulate saliva in the oral cavity as well as gather any secretion/nasal mucus in the oropharynx, and then to deposit these secretions and additional saliva into the collection tube.

In another embodiment, the integrity of human DNA was tested through internal control analysis, the stability at ambient temperature of the transport medium, and the RNA and DNA integrity by freezing at -20 and -70 °C.

In one embodiment, the viral transport media were prepared according to Table 1, with the following reagents:
- Fetal Bovine Serum: Inactivate into a 56 °C water bath for 30 minutes.
- Antibiotic preparation: Preparation of 100 µg/mL Gentamicin solution: Add 5 mg of Gentamicin to 45 mL of saline solution;
- Preparation of 0.5 % g/mL Agar solution: 0.5 g agar in 100 mL of distilled water;
- Preparation of Sucrose solution: 0.58 g of sucrose in 100 mL of distilled water.

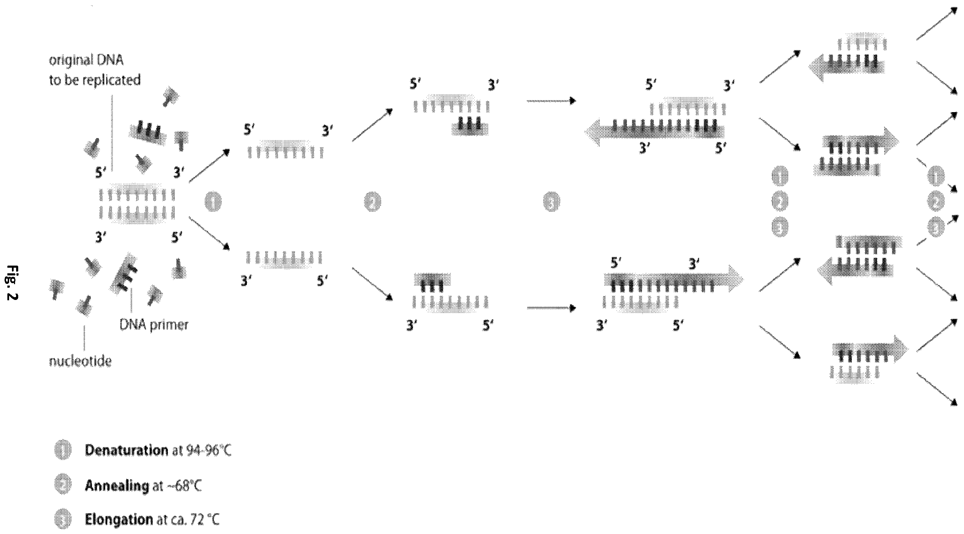

In one embodiment, the extraction and amplification of the viral genetic material is performed by polymerase chain reaction (PCR). Figure 2 schematically represents an embodiment of the real-time PCR reaction performed. The extraction was carried out with FastPure Viral DNA/RNA Mini Kit (Vazyme) and the amplification was carried out using ViroQ SARS-CoV-2 kit (BAG). The real-time RT-PCR was performed with CFX96TM Real-Time System and C100 TM Thermal Cycler.

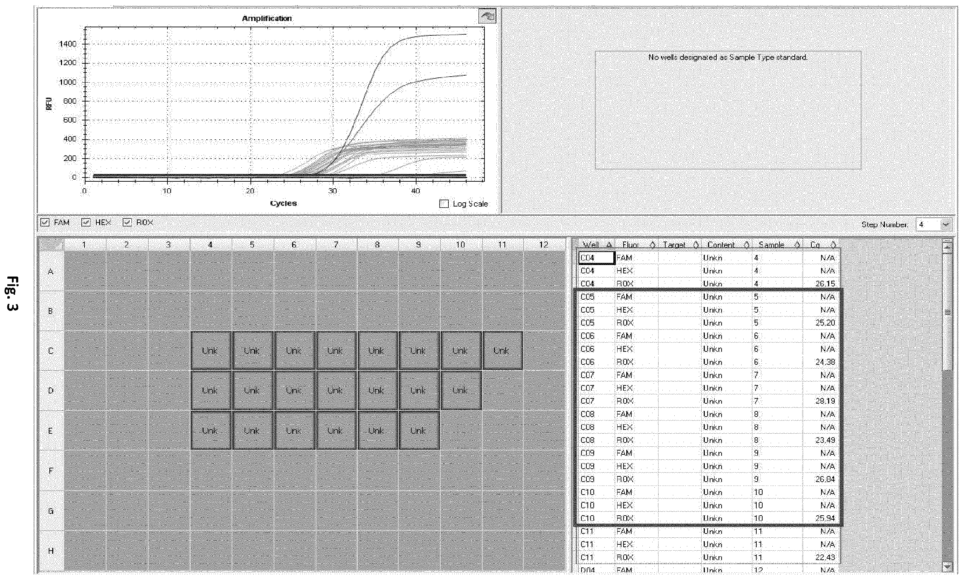

In one embodiment, samples number 5, 6, 7, 8, 9 and 10 were collected using medium 3. After analysis with RT-PCR, the integrity of human DNA was observed by internal control analysis (Fluor-Rox), with negative result for SARS-CoV-2 (Figure 3).

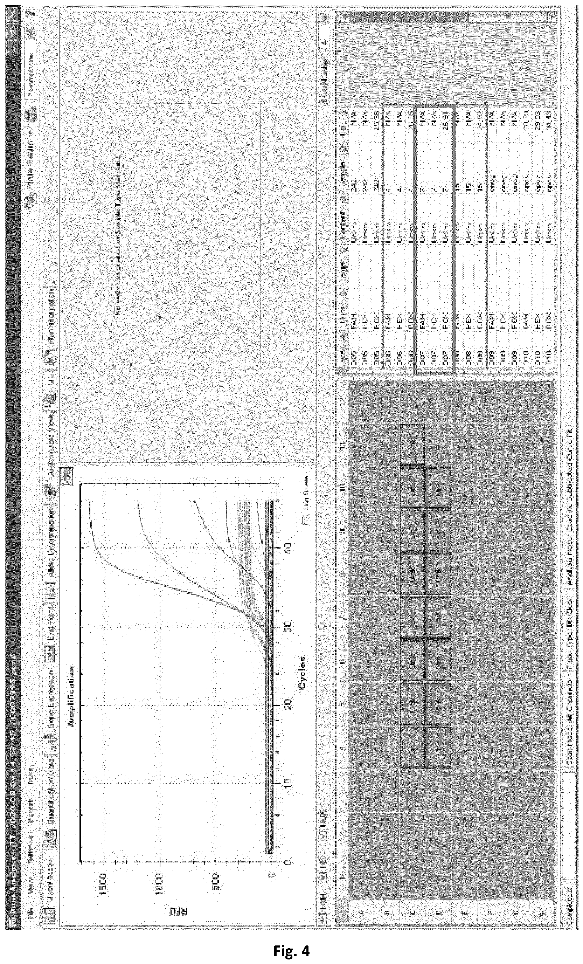

In one embodiment, sample 7 was analysed by RT-PCR (Figure 4) after 5 days frozen at -20 °C, and the integrity of human DNA was observed by internal control analysis (Fluor-Rox).

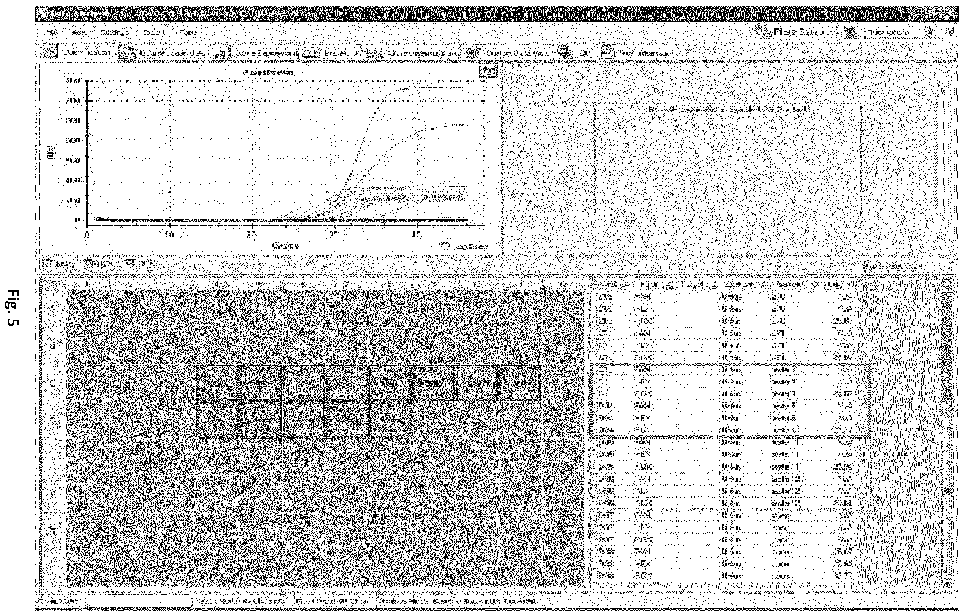

In one embodiment, samples 5 and 6 were analysed by RT-PCR (Figure 5) after 11 days frozen at -20 °C, and the integrity of human DNA was observed by internal control analysis (Fluor-Rox).

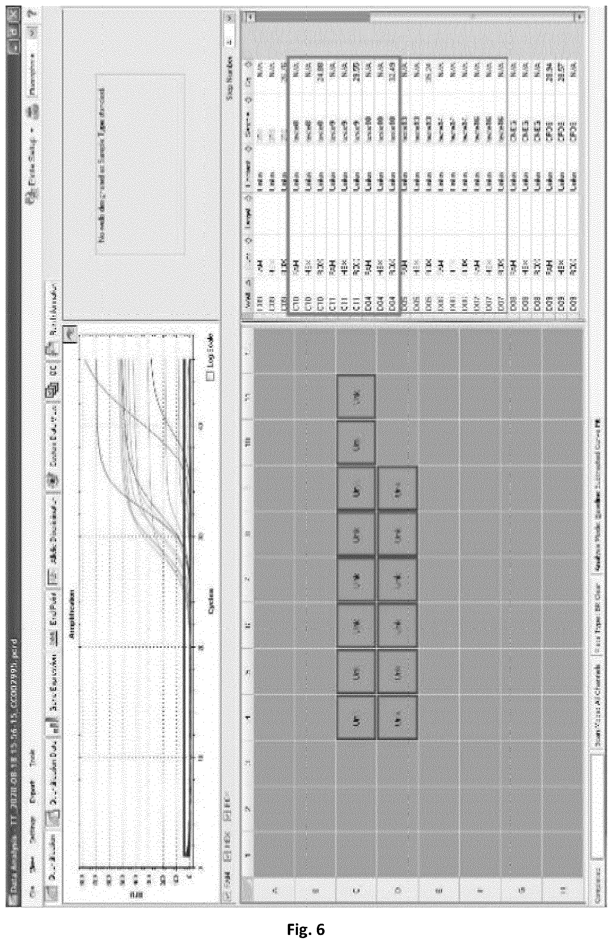

In one embodiment, samples 8, 9 and 10 were analysed by RT-PCR (Figure 6), and the integrity of human DNA was observed by internal control analysis (Fluor-Rox).

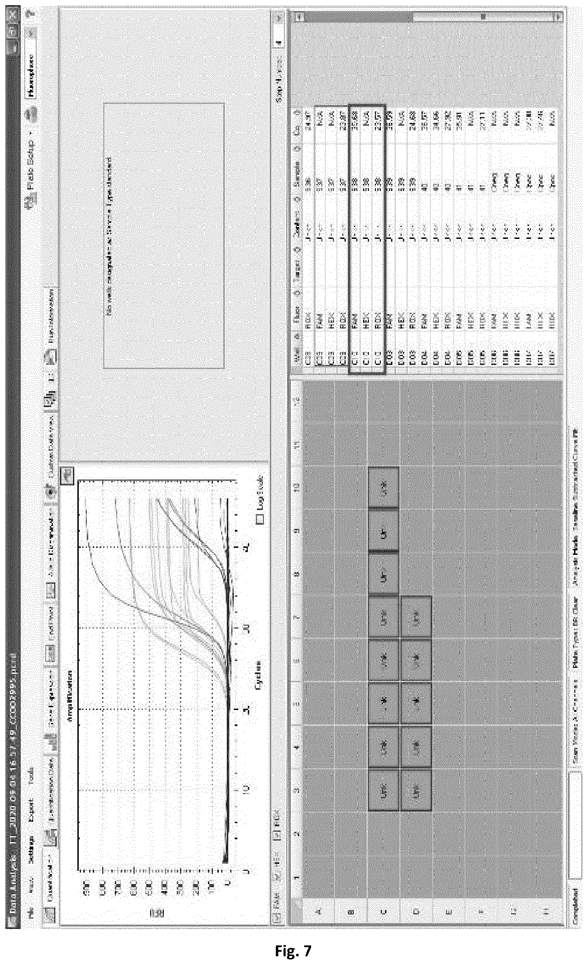

In one embodiment, sample 38 was collected using medium 3. After analysis with RT-PCR (Figure 7), the integrity of human DNA was observed by internal control analysis (Fluor-Rox), and a positive result for Sars-CoV-2 (Fluor-Fam).

In another embodiment, sample 38 was analysed by RT-PCR, after 7 days frozen at -20 °C, where the integrity of human DNA was observed by internal control analysis (Fluor-Rox) and the integrity of RNA of the Sars-CoV-2 virus (Fluor-FAM).

In a preferred embodiment, transport medium 3 provided the best conditions for preservation of human genome and viral RNA, including under cryopreservation conditions (-20 °C).

In one embodiment, with the collection of samples both negative and positive for SARS-CoV 2 using the medium described in the present disclosure or other existing commercial media (control), it was found that the medium described in the present disclosure allowed the detection of the presence of human and viral material even after cryopreservation, which did not happen with the existing commercial media.

In one embodiment, the transport medium comprises phosphate buffered saline, fetal bovine serum, agar, amphotericin and gentamicin in the proportions described in Table 1. These constituents meet all the safety conditions for the transport and preservation of the samples collected for RT-PCR analysis of SARS-CoV2 virus.

The term "comprises" or "comprising" whenever used in this document is intended to indicate the presence of the mentioned features, elements, integers, steps and components, but does not preclude the presence or addition of one or more other features, elements, integers, steps and components, or groups thereof.

The described embodiments are combinable with each other.

The present invention is not, of course, restricted in any way to the embodiments described in this document and a person with ordinary skill in the art may foresee many possibilities for modifying it and replacing technical features by equivalent ones, depending on the requirements of each situation, as defined in the appended claims.

The following claims define additional embodiments of the present description.

## Claims

1. Composition for cryopreservation of a biological sample for the identification of a virus by polymerase chain reaction (PCR) comprising:
a buffer solution for maintenance of physiological pH and osmotic pressure;
a protein solution for preservation of the genetic material of the sample;
at least one antimicrobial agent to prevent sample contamination;
a solution comprising agar and/or sucrose to support the sample and
preserve the contents of the biological sample.

2. Composition for cryopreservation according to the previous claim **characterized in that** it comprises agar to support the sample and preserve the contents of the biological sample.

3. Composition according to any of the previous claims comprising:
65 - 83 % (v/v) of a buffer solution;
1 - 5 % (v/v) of a protein solution;
0.5 - 3 % (v/v) of at least one antimicrobial agent;
15 - 20 % (v/v) of a solution comprising agar and/or sucrose.

4. Composition according to any of the previous claims comprising:
80 - 83 % (v/v) of a buffer solution;
1 - 2 % (v/v) of a protein solution;
0.5 -1 % (v/v) of at least one antimicrobial agent;
15 - 17 % (v/v) of a solution comprising agar and sucrose.

5. Composition for cryopreservation according to the previous claims **characterized in that** it further comprises a lysis solution; preferably an alcoholic solution of guanidine thiocyanate.

6. Composition for cryopreservation according to any of the previous claims wherein the antimicrobial agent is an antibiotic, or an antifungal or mixtures thereof.

7. Composition for cryopreservation according to any of the previous claims wherein the antibiotic is selected from a list consisting of colistin, gentamicin, vancomycin, or mixtures thereof, preferably gentamicin.

8. Composition for cryopreservation according to any of the previous claims wherein the antifungal is amphotericin B.

9. Composition for cryopreservation according to any of the previous claims wherein the buffer solution is Hank's balanced salt solution, phosphate saline buffer, or mixtures thereof.

10. Composition for cryopreservation according to any of the previous claims wherein the protein solution is fetal bovine serum, fetal equine serum, or mixtures thereof, preferably fetal bovine serum.

11. Composition for cryopreservation according to any of the previous claims wherein the biological sample is a saliva sample, or an oral mucosa sample, a nasopharynx sample, or an oropharynx sample.

12. Composition for cryopreservation according to any of the previous claims wherein the virus is Severe Acute Respiratory Syndrome-Coronavirus (SARS-CoV-2).

13. Kit for cryopreservation of a biological sample comprising the composition for cryopreservation described in any of the previous claims and a container.

14. Kit for cryopreservation according to the previous claim further comprising a sample collection means, preferably a swab.

15. Kit for cryopreservation according to any of claims 13-14 wherein the total volume of the sample ranges from 250 - 350 ml, preferably from 305 - 320 ml.

16. Use of the composition for cryopreservation described in any of the previous claims for the preservation of biological samples as an improver or enhancer of the preservation of the sample genetic material.

17. Use of the composition for cryopreservation described in the claim as a preservative of the biological sample genetic material for up to 48 h after collection, preferably 72 h.

18. Use of the composition for cryopreservation described in any of the previous claims wherein the freezing temperature ranges from -70 °C to 5 °C.

19. Use of the composition for cryopreservation described in any of the previous claims wherein the freezing temperature ranges from -70 °C to -20 °C.
